# EUROPÄISCHE PATENTSCHRIFT

(11) **EP 2 927 062 B1**
(45) Veröffentlichungstag und Bekanntmachung des Hinweises auf die Patenterteilung: **10.05.2017**
(21) Anmeldenummer: 15159139.3
(22) Anmeldetag: 16.03.2015
(51) Int. Cl.: B60T 7/04, B60K 23/02, B60T 8/40, B60T 11/224, F16D 25/00

(54) **PEDALKRAFTSIMULATIONSVORRICHTUNG**
PEDAL FORCE SIMULATING DEVICE
DISPOSITIF DE SIMULATION DE FORCE DE PÉDALAGE

(30) Priorität: 03.04.2014 DE 102014206408
(43) Veröffentlichungstag der Anmeldung: 07.10.2015
(73) Patentinhaber: Schaeffler Technologies AG & Co. KG, 91074 Herzogenaurach (DE)
(72) Erfinder: Baßler, Manuel, 77855 Achern (DE)

(56) Entgegenhaltungen:
- EP-A1- 1 950 112
- US-A1- 2003 214 179
- US-A1- 2007 205 659

## Beschreibung

Die Erfindung betrifft eine Pedalkraftsimulationsvorrichtung, insbesondere für die Simulation von Pedalkräften von Pedalen von Kraftfahrzeugen oder Simulatoren in denen eine Pedalkraftsimulationsvorrichtung (z.B. Kupplungspedal) eingesetzt werden.

In Kraftfahrzeugen werden Aggregate, wie beispielsweise Kupplungen, Bremsen etc. mittels Pedalen fußbetätigt. Hierzu wird das Pedal beispielsweise an einem Pedalbock schwenkbar angelenkt, wobei durch die Betätigung des Pedals beispielsweise über einen Bowdenzug, eine hydraulische Strecke oder ähnliches das Aggregat betätigt wird. Dabei wirkt auf das Pedal eine typische Rückstellkraft, die dem Bediener das Betätigen erleichtert.

Auch sind Betätigungssysteme bekannt, bei welchen zwischen dem Pedal und dem Aggregat keine direkte mechanische Verbindung mehr vorgesehen ist, sondern an dem Pedal ein Sensor vorgesehen ist, welcher die Betätigung des Pedals erkennt und entsprechend ein Aktuator die Betätigung des Aggregats vornimmt. Solche Vorrichtungen werden bei der Betätigung einer Kupplung beispielsweise "clutch-by-wire" genannt. Auch sind solche Vorrichtung beispielsweise für das Bremspedal oder das Gaspedal bekannt.

Dabei ist es für den Bediener von Nachteil, dass die auf das Pedal wirkende Rückstellkraft nicht mehr originär von dem Aggregat resultiert, weil dadurch die vom Bediener erwartete Rückstellkraft nicht mehr vorliegt und die Betätigung durch den Bediener ungewohnt erscheint. Daher sind Pedalkraftsimulationsvorrichtungen bekannt geworden, welche an dem Pedal angreifen und eine mehr realistische oder gewohnte Rückstellkraft verursachen sollen.

Solche Pedalkraftsimulationsvorrichtungen sind beispielsweise durch die DE 10 2008 061 569 A1, die DE 10 2008 041 349 A1, die US 2007 205 659 oder die DE 103 60 784 B4 bekannt geworden. Allerdings sind die bekannten Pedalkraftsimulationsvorrichtungen relativ kompliziert aufgebaut und weisen bei Verschleiß eine veränderte Kennlinie als Pedalkraftkennlinie auf.

Es ist die Aufgabe der Erfindung, eine Pedalkraftsimulationsvorrichtung zu schaffen, welche einfach aufgebaut ist und auch nach langer Betriebszeit eine realistische Rückstellkraft für das Pedal bewirkt.

Die Aufgabe der Erfindung wird mit den Merkmalen von Anspruch 1 gelöst.

Ein Ausführungsbeispiel der Erfindung betrifft eine Pedalkraftsimulationsvorrichtung mit einem Gehäuse mit einem darin verlagerbar angeordneten Doppelkolben mit einem ersten Kolben und einem zweiten Kolben, wobei der erste Kolben und der zweite Kolben miteinander über eine Kolbenstange verbunden sind, wobei das Gehäuse einen ersten Zylinderraum und einen zweiten Zylinderraum, wobei der erste Kolben in dem ersten Zylinderraum und der zweiten Kolben in dem zweiten Zylinderraum verlagerbar angeordnet sind, mit einem Kraftspeicher, wobei die Kolben entgegen der Rückstellkraft des Kraftspeichers verlagerbar ist, mit einer ersten im Gehäuse angeordneten Bohrung und mit einer zweiten im Gehäuse angeordneten Bohrung, wobei die erste Bohrung den ersten Zylinderraum belüftet, wobei bei Überfahren der ersten Bohrung durch den ersten Kolben der erste Zylinderraum abgeschlossen wird, wobei die zweite Bohrung den zweiten Zylinderraum belüftet, wobei bei Überfahren der zweiten Bohrung durch den zweiten Kolben der zweite Zylinderraum abgeschlossen wird und der erste Zylinderraum belüftet wird. Dadurch wird abhängig von der Stellung der Kolben der erste oder der zweite Zylinderraum als dämpfender Pneumatikzylinder wirksam, so dass die Kolben entgegen einer Rückstellkraft des komprimierten Gases in dem Zylinderraum verlagerbar sind.

Dabei ist es besonders vorteilhaft, wenn der erste Kolben einen ersten Durchmesser aufweist und der zweite Kolben einen zweiten Durchmesser aufweist, wobei der erste Durchmesser des ersten Kolbens im Vergleich zum zweiten Durchmesser des zweiten Kolbens größer, gleich oder kleiner ist. Dadurch kann bei unterschiedlichen Durchmessern eine gezielte Veränderung der Kennlinie der Rückstellkraft als Funktion des Betätigungswegs erreicht werden. Bei größerem ersten Durchmesser als dem zweiten Durchmesser, reduziert sich das Volumen für das Gas mit zunehmender Betätigung in einem ersten Betätigungsabschnitt, was die Rückstellkraft steigen lässt.

Auch ist es besonders vorteilhaft, wenn der erste Zylinderraum einen ersten Durchmesser aufweist und der zweite Zylinderraum einen zweiten Durchmesser aufweist, wobei der erste Durchmesser des ersten Zylinderraums im Vergleich zum zweiten Durchmesser des zweiten Zylinderraums größer, gleich oder kleiner ist.

Auch ist es vorteilhaft, wenn der erste Kolben eine erste Dichtung trägt, welche den ersten Kolben gegenüber dem ersten Zylinderraum abdichtet. Diese erste Dichtung dient der Abdichtung des ersten Zylinderraums nach Überfahren der ersten Bohrung.

Auch ist es vorteilhaft, wenn der zweite Kolben eine zweite Dichtung trägt, welche den zweiten Kolben gegenüber dem zweiten Zylinderraum abdichtet. Diese zweite Dichtung dient der Abdichtung des zweiten Zylinderraums nach Überfahren der zweiten Bohrung.

Weiterhin ist es vorteilhaft, wenn der zweite Kolben eine dritte Dichtung trägt, welche den zweiten Kolben gegenüber dem zweiten Zylinderraum abdichtet. Dabei dient diese Dichtung dazu, den ersten Zylinderraum mittels der zweiten Bohrung belüften zu können, wenn die zweite Bohrung von der dritten Dichtung überfahren wird. Weiterhin ist es vorteilhaft, wenn die dritte Dichtung mit der ersten Dichtung den Druck im ersten Druckraum ansteigen lässt wenn der Kolben verlagert wird und den ersten Druckraum mit der ersten Dichtung abdichtet, bis die dritte Dichtung über die zweite Bohrung fährt, und den Druck aus dem ersten Druckraum abführen kann.

Auch ist es zweckmäßig, wenn der Kraftspeicher sich an einem der Kolben oder an der Kolbenstange einerseits und am Gehäuse andererseits abstützt. Dadurch kann eine gute Kraftübertragung erreicht werden, während der Kraftspeicher bauraumsparend angeordnet ist.

Vorteilhaft ist es auch, wenn das Gehäuse aus Kunststoff hergestellt ist. Dadurch kann eine gute und kostengünstige Herstellbarkeit erreicht werden.

Auch ist es vorteilhaft, wenn die beiden Kolben einteilig ausgebildet sind. Dadurch kann eine gute Herstellbarkeit erreicht werden, weil die Montage vereinfacht wird.

Weiterhin ist es vorteilhaft, wenn das der erste und/oder der zweite Kolben und/oder die Kolbenstange aus Kunststoff hergestellt ist bzw. sind. Dadurch kann eine gute und kostengünstige Herstellbarkeit erreicht werden.

Die vorliegende Erfindung wird nachfolgend anhand bevorzugter Ausführungsbeispiele in Verbindung mit den zugehörigen Figuren näher erläutert:
Dabei zeigen:

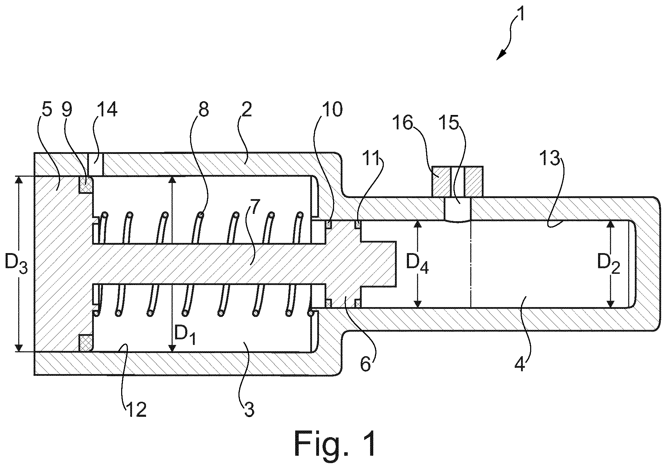

   - Figur 1: eine schematische Ansicht einer Pedalkraftsimulationsvorrichtung.

Die Figur 1 zeigt eine schematische Darstellung einer erfindungsgemäßen Pedalkraftsimulationsvorrichtung 1 mit einem Gehäuse 2 und in dem Gehäuse 2 ausgebildetem ersten Zylinderraum 3 und zweiten Zylinderraum 4.

Das Gehäuse ist bevorzugt aus Kunststoff hergestellt. In Figur 1 ist zu erkennen, dass der erste Zylinderraum 3 einen ersten Durchmesser D1 aufweist und der zweite Zylinderraum 4 einen zweiten Durchmesser D2 aufweist, wobei der erste Durchmesser D1 größer ist als der zweite Durchmesser D2. Bei anderen Ausführungsbeispielen kann der erste Durchmesser D1 auch gleich sein oder kleiner sein als der zweite Durchmesser D2.

In dem Gehäuse 2 sind zwei Kolben 5, 6 verlagerbar angeordnet, die über eine Kolbenstange 7 miteinander verbunden sind. Dabei ist es vorteilhaft, dass der erste Kolben 5 und der zweite Kolben 6 und die Kolbenstange 7 einteilig miteinander ausgebildet sind. Diese sind vorteilhaft aus Kunststoff hergestellt, wie sie gemeinsam durch Spritzgießen beispielsweise herstellbar sind. In Figur 1 ist weiterhin zu erkennen, dass der erste Kolben 5 einen ersten Durchmesser D3 aufweist und der zweite Kolben 6 einen zweiten Durchmesser D4 aufweist, wobei der erste Durchmesser D3 größer ist als der zweite Durchmesser D4. Bei anderen Ausführungsbeispielen kann der erste Durchmesser D3 auch gleich sein oder kleiner sein als der zweite Durchmesser D4.

Im Gehäuse 2 ist weiterhin auch ein Kraftspeicher 8, wie eine Druckfeder, angeordnet, welcher sich einerseits an dem ersten Kolben 5 und andererseits am Gehäuse 2 in axialer Richtung abstützt. Dadurch kann eine Rückstellkraft auf die beiden Kolben ausgeübt werden. Statt der Anlenkung an dem ersten Kolben 5 kann auch eine Anlenkung an der Kolbenstange 7 oder an dem zweiten Kolben 6 erfolgen.

An den Kolben 5, 6 sind Dichtungen 9, 10, 11 vorgesehen. So ist an dem ersten Kolben 5 eine erste Dichtung 9 am Außenumfang angeordnet, so dass die Dichtung 9 den Kolben 5 an der radial außen liegenden Innenwand 12 des ersten Zylinderraums 3 abdichtet. Auch ist an dem zweiten Kolben 6 eine erste Dichtung 10 und eine zweite Dichtung 11 am Außenumfang angeordnet, so dass die Dichtungen 10, 11 den zweiten Kolben 6 an der radial außen liegenden Innenwand 13 des zweiten Zylinderraums 4 abdichten.

In dem Gehäuse sind zwei Bohrungen 14, 15 vorgesehen, welche den Innenraum des Gehäuses 2 mit dem Außenraum verbinden. Die Bohrung 14 ist im Bereich des ersten Zylinderraums 3 angeordnet, welche den ersten Zylinderraum 3 mit dem Außenraum verbinden kann. Ist der Kolben 5 und die erste Dichtung 9 gemäß Figur 1 links neben der Bohrung 14, so ist der Zylinderraum 3 mit dem Außenraum verbunden und belüftet. Überfährt die Dichtung 9 durch Verlagerung des Kolbens 5 die Bohrung 14, so wird der erste Druckraum bzw. Zylinderraum abgedichtet. Bei weiterem Verlagern des ersten Kolbens 5 wird das Volumen des ersten Zylinders 3 reduziert, was eine Kompression der Luft bzw. des Gases in dem Zylinderraum bzw. Druckraum 3 bewirkt und was eine Dämpfung und eine ansteigende Rückstellkraft auf den Kolben 5 bewirkt. Zwar verfährt auch der zweite Kolben 6 dann nach rechts, die damit bewirkte Volumenvergrößerung ist jedoch geringer als die Volumenverringerung durch die Verlagerung des ersten Kolbens 5, solange die Dichtung die Bohrung noch nicht überfahren hat. Für den Fall, dass die Dichtung die Bohrung überfahren hat, verfährt auch der zweite Kolben 6 dann nach rechts, die damit bewirkte Volumenverkleinerung übt dabei keine zusätzliche Rückstellkraft auf den Kolben 6, 7 und 5 aus, da die Bohrung 15 die komprimierte Luft entweichen lässt. Die Kompression des im Zylinderraum 3 vorliegenden Mediums erfolgt so lange, bis die Dichtung 10 die Bohrung 15 überfährt und den ersten Zylinderraum 3 damit belüftet. So entsteht über einen ersten Teilbereich der Verlagerung des ersten Kolbens eine ansteigende Kraftkennlinie, die quasi auf ein Minimum abfällt, wenn die Dichtung 10 die Bohrung 15 überfährt.

Während dieser Verlagerung des ersten Kolbens 5 verfährt auch der zweite Kolben, wobei dieser ohne Rückstellkraft aufgrund einer Kompression des Mediums in dem zweiten Zylinderraum verfahren wird, weil die Dichtung 11 die Bohrung 15 noch nicht überfahren hat und der zweite Zylinderraum noch belüftet ist.

Überfährt die Dichtung 11 die Bohrung 15, so wird der zweite Zylinderraum 4 abgeschlossen und bei weiterer Verlagerung des zweiten Kolbens 6 wird eine Rückstellkraft aufgrund einer Kompression des Mediums in dem zweiten Zylinderraum 4 bewirkt, was bei weiterer Verlagerung des zweiten Kolbens 6 eine ansteigende Kennlinie der Rückstellkraft bewirkt.

Die Kolben 5, 6 werden beispielsweise durch eine nicht gezeigte Anlenkung von einem Pedal oder ähnliches verlagert.

Zur Dimensionierung der Luftausströmung durch die Bohrung 15 ist eine Drossel 16 vorgesehen, welche in ihrem Durchmesser auswählbar ist, um den Widerstand für die austretende Luft bestimmen zu können.

Durch die Wahl der Durchmesser von Kolben bzw. Zylinderräumen und der Drossel bzw. der axialen Lage der Bohrungen kann die Kennlinie der Vorrichtung eingestellt werden.

### Bezugszeichenliste

- 1: Pedalkraftsimulationsvorrichtung
- 2: Gehäuse
- 3: Zylinderraum
- 4: Zylinderraum
- 5: Kolben
- 6: Kolben
- 7: Kolbenstange
- 8: Kraftspeicher
- 9: Dichtung
- 10: Dichtung
- 11: Dichtung
- 12: Innenwand
- 13: Innenwand
- 14: Bohrung
- 15: Bohrung
- 16: Drossel

## Patentansprüche

1. Pedalkraftsimulationsvorrichtung (1) mit einem Gehäuse (2) mit einem darin verlagerbar angeordneten Doppelkolben mit einem ersten Kolben (5) und einem zweiten Kolben (6), wobei der erste Kolben (5) und der zweite Kolben (6) miteinander über eine Kolbenstange (7) verbunden sind, wobei das Gehäuse (2) einen ersten Zylinderraum (3) und einen zweiten Zylinderraum (4), wobei der erste Kolben (5) in dem ersten Zylinderraum (3) und der zweiten Kolben (6) in dem zweiten Zylinderraum (4)verlagerbar angeordnet ist, mit einem Kraftspeicher (8), wobei die Kolben (5,6) entgegen der Rückstellkraft des Kraftspeichers (8) verlagerbar sind, **gekennzeichnet durch** eine erste im Gehäuse angeordnete Bohrung (14) und eine zweite im Gehäuse angeordnete Bohrung (15), wobei die erste Bohrung (14) den ersten Zylinderraum (3) belüftet, wobei bei Überfahren der ersten Bohrung (14) **durch** den ersten Kolben (5) der erste Zylinderraum (3) abgeschlossen wird, wobei die zweite Bohrung (15) den zweiten Zylinderraum (4) belüftet, wobei bei Überfahren der zweiten Bohrung (15) **durch** den zweiten Kolben (6) der zweite Zylinderraum (4) abgeschlossen wird und der erste Zylinderraum (3) belüftet wird.

2. Pedalkraftsimulationsvorrichtung nach Anspruch 1, **dadurch gekennzeichnet, dass** der erste Kolben (5) einen ersten Durchmesser aufweist und der zweite Kolben (6) einen zweiten Durchmesser aufweist, wobei der erste Durchmesser des ersten Kolbens (5) im Vergleich zum zweiten Durchmesser des zweiten Kolbens (6) größer, gleich oder kleiner ist.

3. Pedalkraftsimulationsvorrichtung nach Anspruch 1 oder 2, **dadurch gekennzeichnet, dass** der erste Zylinderraum (3) einen ersten Durchmesser aufweist und der zweite Zylinderraum (4) einen zweiten Durchmesser aufweist, wobei der erste Durchmesser des ersten Zylinderraums (3) im Vergleich zum zweiten Durchmesser des zweiten Zylinderraums (4) größer, gleich oder kleiner ist.

4. Pedalkraftsimulationsvorrichtung nach Anspruch 1, 2 oder 3, **dadurch gekennzeichnet, dass** der erste Kolben (5) eine erste Dichtung (9) trägt, welche den ersten Kolben (5) gegenüber dem ersten Zylinderraum (3) abdichtet.

5. Pedalkraftsimulationsvorrichtung nach Anspruch 1, 2, 3 oder 4, **dadurch gekennzeichnet, dass** der zweite Kolben (4) eine zweite Dichtung (10) trägt, welche den zweiten Kolben (6) gegenüber dem zweiten Zylinderraum (4) abdichtet.

6. Pedalkraftsimulationsvorrichtung nach Anspruch 1, 2, 3, 4 oder 5, **dadurch gekennzeichnet, dass** der zweite Kolben (6) eine dritte Dichtung (11) trägt, welche den zweiten Kolben gegenüber dem zweiten Zylinderraum (4) abdichtet.

7. Pedalkraftsimulationsvorrichtung nach einem der vorhergehenden Ansprüche, **dadurch gekennzeichnet, dass** der Kraftspeicher (8) sich an einem der Kolben (5,6) oder an der Kolbenstange (7) einerseits und am Gehäuse (2) andererseits abstützt.

8. Pedalkraftsimulationsvorrichtung nach einem der vorhergehenden Ansprüche, **dadurch gekennzeichnet, dass** das Gehäuse (2) aus Kunststoff hergestellt ist.

9. Pedalkraftsimulationsvorrichtung nach einem der vorhergehenden Ansprüche, **dadurch gekennzeichnet, dass** die beiden Kolben (5,6) einteilig ausgebildet sind.

10. Pedalkraftsimulationsvorrichtung nach einem der vorhergehenden Ansprüche, **dadurch gekennzeichnet, dass** das der erste und/oder der zweite Kolben (5,6) und/oder die Kolbenstange (7) aus Kunststoff hergestellt ist bzw. sind.

## Claims

1. Pedal force simulation apparatus (1) having a housing (2) with a double piston which is arranged movably therein with a first piston (5) and a second piston (6), the first piston (5) and the second piston (6) being connected to one another via a piston rod (7), the housing (2) a first cylinder space (3) and a second cylinder space (4), the first piston (5) being arranged movably in the first cylinder space (3) and the second piston (6) being arranged movably in the second cylinder space (4), having a force accumulator (8), it being possible for the pistons (5, 6) to be moved counter to the restoring force of the force accumulator (8), **characterized by** a first bore (14) which is arranged in the housing and a second bore (15) which is arranged in the housing, the first bore (14) venting the first cylinder space (3), the first cylinder space (3) being closed off when the first piston (5) moves over the first bore (14), the second bore (15) venting the second cylinder space (4), the second cylinder space (4) being closed off and the first cylinder space (3) being vented when the second piston (6) moves over the second bore (15).

2. Pedal force simulation apparatus according to Claim 1, **characterized in that** the first piston (5) has a first diameter and the second piston (6) has a second diameter, the first diameter of the first piston (5) being greater, identical or smaller in comparison with the second diameter of the second piston (6).

3. Pedal force simulation apparatus according to Claim 1 or 2, **characterized in that** the first cylinder space (3) has a first diameter and the second cylinder space (4) has a second diameter, the first diameter of the first cylinder space (3) being greater, identical or smaller in comparison with the second diameter of the second cylinder space (4).

4. Pedal force simulation apparatus according to Claim 1, 2 or 3, **characterized in that** the first piston (5) supports a first seal (9) which seals the first piston (5) with respect to the first cylinder space (3).

5. Pedal force simulation apparatus according to Claim 1, 2, 3 or 4, **characterized in that** the second piston (4) supports a second seal (10) which seals the second piston (6) with respect to the second cylinder space (4).

6. Pedal force simulation apparatus according to Claim 1, 2, 3, 4 or 5, **characterized in that** the second piston (6) supports a third seal (11) which seals the second piston with respect to the second cylinder space (4).

7. Pedal force simulation apparatus according to one of the preceding claims, **characterized in that** the force accumulator (8) is supported on one side on one of the pistons (5, 6) or on the piston rod (7) and on the other side on the housing (2).

8. Pedal force simulation apparatus according to one of the preceding claims, **characterized in that** the housing (2) is produced from plastic.

9. Pedal force simulation apparatus according to one of the preceding claims, **characterized in that** the two pistons (5, 6) are configured in one piece.

10. Pedal force simulation apparatus according to one of the preceding claims, **characterized in that** the first and/or the second piston (5, 6) and/or the piston rod (7) is/are produced from plastic.

## Revendications

1. Dispositif de simulation de force de pédale (1), comprenant un boîtier (2) avec un double piston disposé de manière déplaçable dans celui-ci, avec un premier piston (5) et un deuxième piston (6), le premier piston (5) et le deuxième piston (6) étant connectés l'un à l'autre par le biais d'une tige de piston (7), le boîtier (2) un premier espace de cylindre (3) et un deuxième espace de cylindre (4), le premier piston (5) étant disposé de manière déplaçable dans le premier espace de cylindre (3) et le deuxième piston (6) étant disposé de manière déplaçable dans le deuxième espace de cylindre (4), comprenant un accumulateur de force (8), les pistons (5, 6) pouvant être déplacés à l'encontre de la force de rappel de l'accumulateur de force (8), **caractérisé par** un premier alésage (14) disposé dans le boîtier et un deuxième alésage (15) disposé dans le boîtier, le premier alésage (14) ventilant le premier espace de cylindre (3), lors du passage du premier alésage (14) à travers le premier piston (5), le premier espace de cylindre (3) étant fermé, le deuxième alésage (15) ventilant le deuxième espace de cylindre (4), et lors du passage du deuxième piston (6) à travers le deuxième alésage (15), le deuxième espace de cylindre (4) étant fermé et le premier espace de cylindre (3) étant ventilé.

2. Dispositif de simulation de force de pédale selon la revendication 1, **caractérisé en ce que** le premier piston (5) présente un premier diamètre et le deuxième piston (6) présente un deuxième diamètre, le premier diamètre du premier piston (5), par comparaison avec le deuxième diamètre du deuxième piston (6), étant supérieur, identique ou inférieur.

3. Dispositif de simulation de force de pédale selon la revendication 1 ou 2, **caractérisé en ce que** le premier espace de cylindre (3) présente un premier diamètre et le deuxième espace de cylindre (4) présente un deuxième diamètre, le premier diamètre du premier espace de cylindre (3), par comparaison avec le deuxième diamètre du deuxième espace de cylindre (4), étant supérieur, identique ou inférieur.

4. Dispositif de simulation de force de pédale selon la revendication 1, 2 ou 3, **caractérisé en ce que** le premier piston (5) porte un premier joint d'étanchéité (9), qui étanchéifie le premier piston (5) par rapport au premier espace de cylindre (3).

5. Dispositif de simulation de force de pédale selon la revendication 1, 2, 3 ou 4, **caractérisé en ce que** le deuxième piston (4) porte un deuxième joint d'étanchéité (10), qui étanchéifie le deuxième piston (6) par rapport au deuxième espace de cylindre (4).

6. Dispositif de simulation de force de pédale selon la revendication 1, 2, 3, 4 ou 5, **caractérisé en ce que** le deuxième piston (6) porte un troisième joint d'étanchéité (11) qui étanchéifie le deuxième piston par rapport au deuxième espace de cylindre (4).

7. Dispositif de simulation de force de pédale selon l'une quelconque des revendications précédentes, **caractérisé en ce que** l'accumulateur de force (8) s'appuie d'une part contre l'un des pistons (5, 6) ou contre la tige de piston (7) et d'autre part contre le boîtier (2).

8. Dispositif de simulation de force de pédale selon l'une quelconque des revendications précédentes, **caractérisé en ce que** le boîtier (2) est fabriqué en plastique.

9. Dispositif de simulation de force de pédale selon l'une quelconque des revendications précédentes, **caractérisé en ce que** les deux pistons (5, 6) sont réalisés d'une seule pièce.

10. Dispositif de simulation de force de pédale selon l'une quelconque des revendications précédentes, **caractérisé en ce que** le premier et/ou le deuxième piston (5, 6) et/ou la tige de piston (7) est/sont fabriqués en plastique.
